# EUROPÄISCHE PATENTSCHRIFT

(11) **EP 3 380 383 B1**
(45) Veröffentlichungstag und Bekanntmachung des Hinweises auf die Patenterteilung: **27.01.2021**
(21) Anmeldenummer: 16825350.8
(22) Anmeldetag: 15.12.2016
(51) Int. Cl.: B61D 37/00, B60R 5/00

(54) **GEPÄCKABLAGEMODUL FÜR EIN FAHRZEUG**
LUGGAGE RACK MODULE FOR A VEHICLE
MODULE DE DÉPÔT DE BAGAGES CONÇU POUR UN VÉHICULE

(30) Priorität: 21.01.2016 DE 102016200824
(43) Veröffentlichungstag der Anmeldung: 03.10.2018
(73) Patentinhaber: Siemens Mobility GmbH, 81739 München (DE)
(72) Erfinder: DEGENER, Alexander, 45899 Gesenkirchen (DE); DENGEL, Yannick, 47259 Duisburg (DE); KOCK, Melvin, 46446 Emmerich (DE); RIEGER, Adrian, 47798 Krefeld (DE); ZIMMER, Matthias, 40789 Monheim am Rhein (DE)
(86) Internationale Anmeldenummer: PCT/EP2016/081192
(87) Internationale Veröffentlichungsnummer: WO 2017/125217

(56) Entgegenhaltungen:
- EP-A2- 2 055 610
- EP-A2- 2 495 150
- DE-A1- 4 423 691
- DE-U1- 9 211 116
- US-A- 2 251 050
- US-A- 2 541 864
- US-A- 2 541 898

## Beschreibung

Die Erfindung bezieht sich auf ein Gepäckablagemodul für ein Fahrzeug, insbesondere Schienenfahrzeug, mit einem Tragrahmen, der einen hinteren Holm zur Befestigung an einem Fahrzeugrohbau, zwei seitliche Halter und einen vorderen Holm umfasst, sowie eine Auflageplatte für Gepäck trägt.

Ein solches Gepäckablagemodul ist beispielsweise aus der DE 10 2007 052 493 A1 bekannt. Dabei wird es als nachteilig empfunden, dass ein solches Gepäckablagemodul nicht ohne weiteres die Möglichkeit verschafft, Komponenten auszutauschen und in dieser Weise Gestalt und Funktion des Gepäckablagemoduls beispielsweise an einen jeweiligen Kundenwunsch anzupassen. Es ist vielmehr bisher erforderlich gewesen, zur Änderung einer Gestalt oder Funktion einer Gepäckablagekomponente umfangreiche Um-/Neukonstruktionen und eine vollständige Demontage des Gepäckablagemoduls vorzunehmen.

Ausgehend hiervon liegt der Erfindung die Aufgabe zugrunde, ein Gepäckablagemodul der eingangs genannten Art derart weiterzuentwickeln, dass sich wenigstens einzelne Komponenten des Gepäckablagemoduls aufwandsarm austauschen lassen.

Diese Aufgabe wird gelöst durch ein Gepäckablagemodul mit den Merkmalen des Anspruchs 1.

Danach ist vorgesehen ein Gepäckablagemodul für ein Fahrzeug, mit einem Tragrahmen, der einen hinteren Holm zur Befestigung an einem Fahrzeugrohbau, zwei seitliche Halter und einen vorderen Holm umfasst sowie eine Auflageplatte für Gepäck trägt, wobei der vordere Holm ein Tragelement aufweist, das sich zwischen den seitlichen Haltern erstreckt, an den seitlichen Haltern befestigt ist und an seiner Vorderseite eine Aufnahme für ein Verkleidungselement und auf seiner Rückseite eine Aufnahme für eine Tragplattenaufnahme aufweist, wobei das Verkleidungselement und die Tragplattenaufnahme ausschließlich an dem Tragelement des vorderen Holms befestigt sind.

Der vordere Holm des Tragrahmens des Gepäckablagemoduls ist somit wenigstens dreiteilig ausgebildet, wobei das vorgesehene Tragelement als Halter für weitere Komponenten des vorderen Holms dient, nämlich für das Verkleidungselement und die Tragplattenaufnahme. Dabei kann beispielsweise das Verkleidungselement in verschiedenartiger Form vorliegen, z. B. als Haltegriff oder Halteelement oder auch als Funktionselement mit designtechnischen Aufgaben.

Beispielsweise kann die Aufnahme des Tragelements des vorderen Holms für das Verkleidungselement von einer Nut gebildet sein, in welche das Verkleidungselement eingesteckt ist. Dies stellt eine einfache Art der Befestigung für das Verkleidungselement an dem Tragelement des vorderen Holms dar.

Die Aufnahme des Tragelements des vorderen Holms für die Tragplattenaufnahme kann als Stufe ausgebildet sein, auf welche die Tragplattenaufnahme gesetzt ist. Es versteht sich, dass die Tragplattenaufnahme mit einer Vorderkante der Tragplatte in geeigneter Weise zusammenwirkt.

In Querrichtung des vorderen Holms kann sich die Tragplattenaufnahme über das Tragelement erstrecken und unmittelbar an das Verkleidungselement anschließen. Daraus ergibt sich ein ästhetisch ansprechendes Erscheinungsbild für den vorderen Holm.

Die Tragplattenaufnahme kann mit dem Verkleidungselement mittels einer vertikal angeordneten Schraubverbindung verbunden sein. In diesem Fall ist die Schraubverbindung von oben her zugänglich, so dass eine einfache Demontage des Verkleidungselements möglich ist.

Das Tragelement kann mit der Tragplattenaufnahme über eine horizontal angeordnete Schraubverbindung verbunden sein. In diesem Fall ist bei dem entfernten Verkleidungselement die horizontal angeordnete Schraubverbindung von vorn des Gepäckablagemoduls zugänglich, so dass sich die Tragplattenaufnahme aufwandsarm von dem Tragelement des vorderen Holms lösen lässt.

Ausführungsbeispiele der Erfindung werden nachfolgend unter Bezugnahme auf die Zeichnung noch näher erläutert. Es zeigen:
- Figur 1: eine perspektivische Ansicht eines Gepäckablagemoduls,
- Figur 2: eine perspektivische Ansicht eines Längsabschnitts eines vorderen Holms des Gepäckablagemoduls von Figur 1 und
- Figur 3: eine Querschnittsansicht eines vorderen Holms in einer weiteren Ausführungsform.

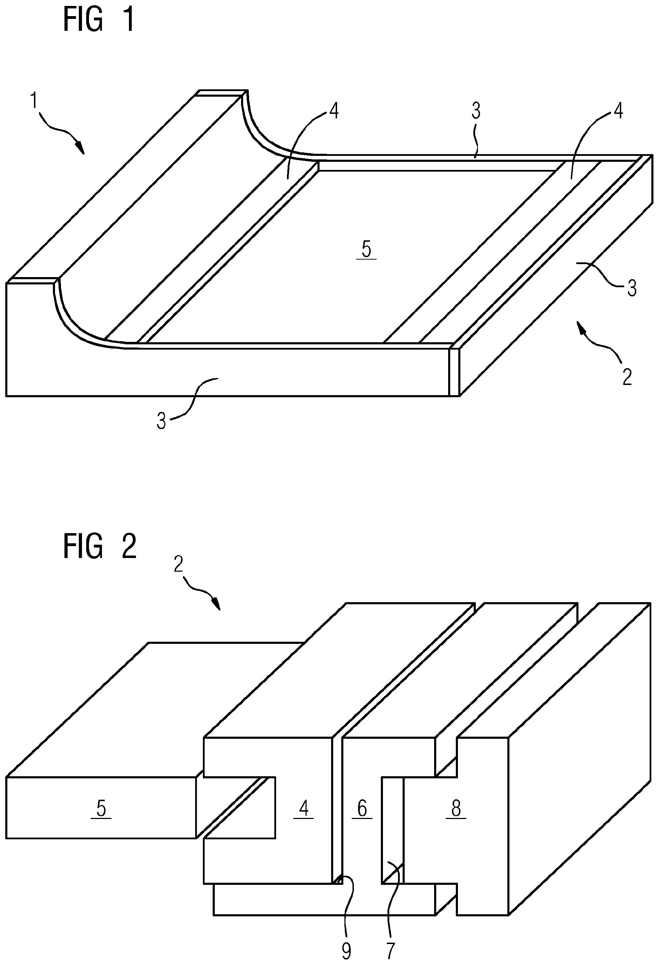

Wie aus Figur 1 hervorgeht, weist ein Gepäckablagemodul einen hier vierteiligen Tragrahmen auf, der von einem hinteren Holm 1, einem vorderen Holm 2 und zwei seitlichen Haltern 3 gebildet ist. Dabei erstrecken sich der vordere Holm 2 und der hintere Holm 1 jeweils zwischen den seitlichen Haltern 3 und sind mit diesen verschraubt. Der hintere Holm 1 als auch der vordere Holm 2 umfassen jeweils eine Tragplattenaufnahme 4, die zum Halten der vorderen bzw. hinteren Kante einer zentral angeordneten Tragplatte 5 dient.

Der Aufbau des vorderen Holms 2 in einer ersten Ausführungsform geht aus Figur 2 mehr im Detail hervor. Es ist ersichtlich, dass der vordere Holm 2 ein Tragelement 6 umfasst, welches per Schraubverbindungen mit den seitlichen Haltern 3 verbunden ist. An einer Vorderseite des Tragelements 6 findet sich eine nutförmige Aufnahme 7, in welche ein Verkleidungselement 8 einsetzbar ist.

Auf der Rückseite des Tragelements 6 des vorderen Holms 2 ist eine stufenförmige Aufnahme 9 vorgesehen, auf die die Tragplattenaufnahme 4 gesetzt ist.

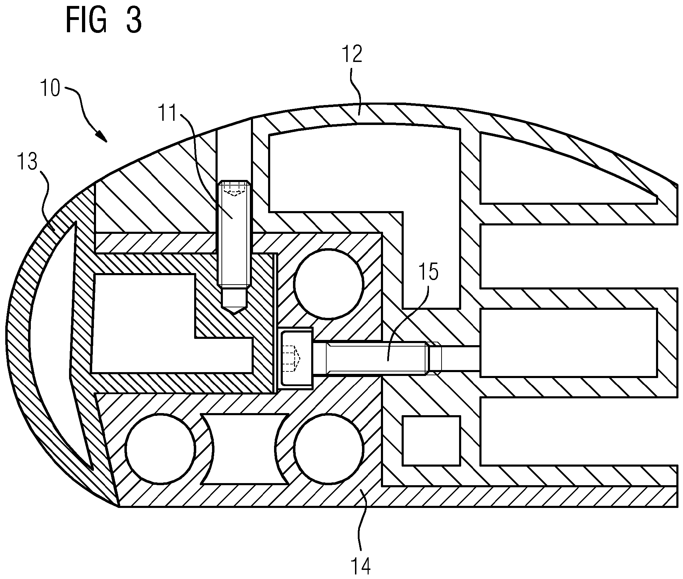

Bei der Darstellung nach Figur 3 ist ein vorderer Holm 10 vorgesehen, dessen Ausgestaltung gegenüber demjenigen nach Figur 2 leicht modifiziert ist.

Es ist ersichtlich, dass mittels eines Gewindestiftes 11 eine Verbindung zwischen einer Tragplattenaufnahme 12 und einem Verkleidungselement 13 geschaffen ist, wobei der Gewindestift 11 eine Wand eines Tragelements 14 durchstößt und in das Verkleidungselement 13 eingeschraubt ist.

Zudem wird die Tragplattenaufnahme 12 an dem Tragelement 14 mithilfe einer Innensechskantschraube 15 befestigt, wobei der Kopf der Innensechskantschraube 15 von der Vorderseite des Tragelements 14 zugänglich ist, wenn das Verkleidungselement 13 entfernt ist.

Es ist ersichtlich, dass die Tragplattenaufnahme 12 sich über das Tragelement 14 erstreckt und mit seinem nach vorn gerichteten Ende gegen das Verkleidungselement 13 stößt. Befestigungsabschnitte der anhand von Figur 3 beschriebenen Art finden sich mehrfach entlang dem vorderen Holm 10.

## Patentansprüche

1. Gepäckablagemodul für ein Fahrzeug,
mit einem Tragrahmen, der einen hinteren Holm (1) zur Befestigung an einem Fahrzeugrohbau, zwei seitliche Halter (3) und einen vorderen Holm (2, 10) umfasst sowie eine Auflageplatte für Gepäck trägt,
**dadurch gekennzeichnet, dass**
der vordere Holm (2, 10) ein Tragelement (6, 14) aufweist, das sich zwischen den seitlichen Haltern (3) erstreckt, an den seitlichen Haltern (3) befestigt ist und an seiner Vorderseite eine Aufnahme (7) für ein Verkleidungselement (8) und auf seiner Rückseite eine Aufnahme (9) für eine Tragplattenaufnahme (4, 12) aufweist,
wobei das Verkleidungselement (8, 13) und die Tragplattenaufnahme (4, 12) ausschließlich an dem Tragelement (6) des vorderen Holms (2) befestigt sind.

2. Gepäckablagemodul nach Anspruch 1,
**dadurch gekennzeichnet, dass**
die Aufnahme (7) des Tragelements (6, 14) des vorderen Holms (2) für das Verkleidungselement (8, 13) von einer Nut gebildet ist, in welche das Verkleidungselement (8, 13) eingesteckt ist.

3. Gepäckablagemodul nach einem der Ansprüche 1 oder 2,
**dadurch gekennzeichnet, dass**,
die Aufnahme (9) des Tragelements (6) des vorderen Holms für die Tragplattenaufnahme (4, 12) als Stufe ausgebildet ist, auf welche die Tragplattenaufnahme (4, 12) gesetzt ist.

4. Gepäckablagemodul nach einem der Ansprüche 1 bis 3,
**dadurch gekennzeichnet, dass**
sich in Querrichtung des vorderen Holms (2) die Tragplattenaufnahme (4, 12) über das Tragelement (6, 14) erstreckt und unmittelbar an das Verkleidungselement (8, 13) anschließt.

5. Gepäckablagemodul nach Anspruch 4,
**dadurch gekennzeichnet, dass**
die Tragplattenaufnahme (4, 12) mit dem Verkleidungselement 8, 13) mittels einer vertikal angeordneten Schraubverbindung verbunden ist.

6. Gepäckablagemodul nach einem der Ansprüche 1 bis 5,
**dadurch gekennzeichnet, dass**
das Tragelement (6, 14) mit der Tragplattenaufnahme (4, 12) über eine horizontal angeordnete Schraubverbindung verbunden ist.

## Claims

1. Luggage rack module for a vehicle, having a support frame that comprises a rear bar (1) for fastening to a vehicle shell, two lateral holders (3) and a front bar (2, 10), and a supporting plate for luggage,
**characterized in that**
the front bar (2, 10) has a support element (6, 14) that extends between the lateral holders (3), is fastened to the lateral holders (3) and has, on its front side, a receptacle (7) for a trim element (8) and, on its rear side, a receptacle (9) for a support plate receptacle (4, 12),
wherein the trim element (8, 13) and the support plate receptacle (4, 12) are fastened only to the support element (6) of the front bar (2).

2. Luggage rack module according to Claim 1,
**characterized in that**
the receptacle (7) on the support element (6, 14) of the front bar (2) for the trim element (8, 13) is formed by a slot, into which the trim element (8, 13) has been plugged.

3. Luggage rack module according to either of Claims 1 and 2,
**characterized in that**
the receptacle (9) on the support element (6) of the front bar for the support plate receptacle (4, 12) is in the form of a step, onto which the support plate receptacle (4, 12) has been placed.

4. Luggage rack module according to one of Claims 1 to 3,
**characterized in that**
the support plate receptacle (4, 12) extends in the transverse direction of the front bar (2) over the support element (6, 14) and directly adjoins the trim element (8, 13).

5. Luggage rack module according to Claim 4,
**characterized in that**
the support plate receptacle (4, 12) is connected to the trim element (8, 13) by means of a vertically arranged screw connection.

6. Luggage rack module according to one of Claims 1 to 5,
**characterized in that**
the support element (6, 14) is connected to the support plate receptacle (4, 12) via a horizontally arranged screw connection.

## Revendications

1. Module de dépôt de bagages pour un véhicule,
comprenant un cadre porteur, qui comprend un longeron (1) arrière de fixation à un chaudron de véhicule, deux supports (3) latéraux et un longeron (2, 10) avant, et qui porte aussi une plaque de dépôt de bagages,
**caractérisé en ce que**
le longeron (2, 10) avant à un élément (6, 14) porteur, qui s'étend entre les supports (3) latéraux, est fixé aux supports (3) latéraux et a, sur son côté avant, un logement (7) d'un élément (8) d'habillage et, sur son côté arrière, un logement (9) pour un siège (4, 12) de la plaque porteuse,
dans lequel l'élément (8, 13) d'habillage et le siège (4, 12) de la plaque porteuse sont fixés exclusivement à l'élément (6) porteur du longeron (2) avant.

2. Module de dépôt de bagages suivant la revendication 1,
**caractérisé en ce que**
le logement (7) de l'élément (6, 14) porteur du longeron (2) avant pour l'élément (8, 13) d'habillage est formé d'une rainure, dans laquelle l'élément (8, 13) d'habillage est enfiché.

3. Module de dépôt de bagages suivant l'une des revendications 1 ou 2,
**caractérisé en ce que**
le logement (9) de l'élément (6) porteur du longeron avant pour le siège (4, 12) de la plaque porteuse est constitué sous la forme d'un palier, sur lequel le siège (4, 12) de la plaque porteuse est posée.

4. Module de dépôt de bagages suivant l'une des revendications 1 à 3,
**caractérisé en ce que**
le siège (4, 12) de la plaque porteuse s'étend dans la direction transversale du longeron (2) avant sur l'élément (6, 14) porteur et se raccorde directement à l'élément (8, 13) d'habillage.

5. Module de dépôt de bagages suivant la revendication 4,
**caractérisé en ce que**
le siège (4, 12) de la plaque porteuse est relié à l'élément (8, 13) d'habillage au moyen d'un vissage disposé verticalement.

6. Module de dépôt de bagages suivant l'une des revendications 1 à 5,
**caractérisé en ce que** l'élément (6, 14) porteur est relié au siège (4, 12) de la plaque porteuse par un vissage disposé horizontalement.
